# EUROPEAN PATENT APPLICATION

(11) **EP 4 389 490 A1**
(43) Date of publication of application: **26.06.2024**
(21) Application number: 22858324.1
(22) Date of filing: 04.08.2022
(51) Int. Cl.: B60K 35/00, G02B 27/01

(54) **DISPLAY DEVICE**

(30) Priority: 18.08.2021 JP 2021133478
(71) Applicant: KOITO MANUFACTURING CO., LTD., Minato-ku, Tokyo, 108-8711 (JP)
(72) Inventor: ENDO, Masahiro, Shizuoka-shi, Shizuoka 424-8764 (JP); FUJIYOSHI, Takatomo, Shizuoka-shi, Shizuoka 424-8764 (JP)
(74) Representative: Cabinet Beau de Loménie
(86) International application number: PCT/JP2022/029917
(87) International publication number: WO 2023/022003

(57) **Abstract**

To provide a display apparatus capable of preventing an optical element provided in the display apparatus such as a HUD apparatus from rattling, to adjust a display position of an image with high accuracy. In a HUD apparatus 1 including a concave mirror 3 that projects image light of an image displayed on an image display unit 2, the concave mirror 3 is supported on an apparatus body 5 via the rotary shaft 33, 34 and is able to pivot in a direction around an axis with a rotation mechanism 4. A single elastic member 6 is included that urges the concave mirror 3 in the axial direction and the direction around the axis of the rotary shaft 33, 34.

## Description

### TECHNICAL FIELD

The present invention relates to a display apparatus arranged in a vehicle such as an automobile, and particularly relates to a display apparatus suitable for application to a head up display.

### BACKGROUND ART

There is proposed as a display apparatus for an automobile a head up display (hereinafter referred to as HUD apparatus) that displays a necessary image for an occupant of the automobile. In Patent Literature 1, a HUD apparatus configured to project, on a windshield (windscreen) of an automobile, an image displayed on an image display such as a liquid crystal (LCD) through an optical system and to allow an occupant to visually recognize a virtual image (hereinafter also referred to as display image) formed in front of this windshield is proposed. Moreover, this HUD apparatus includes a concave mirror in a part of the optical system projecting the image, and supports this concave mirror on a support part. This HUD apparatus includes a rotation mechanism for angle adjustment of the concave mirror in order to change a position where image light reflected on the concave mirror is projected on the windshield to adjust a position of visual recognition of the display image.

While in the HUD apparatus of Patent Literature 1, a rotary shaft for the concave mirror is supported on the support part, a positional deviation of the display image tends to arise due to looseness occurring between the rotary shaft and the support part, which causes a concern of deterioration of visual recognition ability. While in order to prevent this, there is taken a configuration to press the rotary shaft onto the support part with an elastic member, this is a configuration to press the rotary shaft in the radial direction, and therefore, it is difficult to prevent the rotary shaft from rattling in the axial direction.

Meanwhile, in Patent Literature 2, there is proposed a technology, for a HUD apparatus, to prevent the rotary shaft from rattling in the thrust direction (axial direction) and in the radial direction (radial direction), by pressing, with an elastic member, the rotary shaft of the concave mirror onto a bearing body in the X-direction and the Z-direction perpendicular to each other.

### CITATION LIST

### PATENT LITERATURE

[Patent Literature 1] Japanese Unexamined Patent Application Publication No. 2018-192962
[Patent Literature 2] Japanese Patent No. 6642290

### SUMMARY OF THE INVENTION

### TECHNICAL PROBLEM

In each of the technologies in Patent Literatures 1 and 2, by pressing, with the elastic member, the rotary shaft of the concave mirror onto an support member such as the support part or the bearing, the rotary shaft is prevented from rattling in the axial direction and/or in the radial direction. However, in a HUD apparatus including a rotation mechanism that adjusts an angular position of the concave mirror, that is, a position thereof in a direction around a rotation axis, even when the technologies in Patent Literatures 1 and 2 are applied, it is difficult to prevent rattling occurring between the rotary shaft and the rotation mechanism coupled thereto, in particular, rattling around the rotation axis. There is therefore a problem that when the concave mirror is tilted, what is called backlash tends to occur between the rotary shaft and the rotation mechanism and it is difficult to control the angular position of the concave mirror with high accuracy. In order to solve this problem, for Patent Literatures 1 and 2, an independent elastic member for preventing rattling around the rotation axis needs to be separately arranged, which is to cause the number of components to increase and assembly work to be complicated.

An object of the present invention provides a display apparatus, such as a HUD apparatus, that prevents rattling on an optical element such as a concave mirror with a simple configuration.

### SOLUTION TO PROBLEM

There is provided a display apparatus according to the present invention, including an optical element that projects, on a translucent member of a vehicle, image light of an image displayed on an image display unit, wherein the optical element is supported on an apparatus body and is able to pivot with a rotation mechanism in a direction around an axis, the display apparatus including a single elastic member that urges the optical element in an axial direction and in the direction around the axis.

As a preferable mode of the present invention, the optical element includes a rotary shaft, and the rotary shaft is pivotally supported on a bearing provided in the apparatus body and is coupled to the rotation mechanism. In addition, there is employed a configuration that the elastic member is composed of a leaf spring and the display apparatus includes a fixation part fixed to the apparatus body, and an elastic contact piece that is in elastic contact with the optical element and urges the optical element in the axial direction and in the direction around the axis.

For example, the elastic member is composed of a leaf spring and includes a fixation part fixed to the apparatus body, a first elastic contact piece that urges the optical element in the axial direction, and a second elastic contact piece that urges the optical element in the direction around the axis. Otherwise, the elastic member is composed of a leaf spring and the display apparatus includes a fixation part fixed to the apparatus body, and an elastic contact piece that generates component forces for urging the optical element in the axial direction and in the direction around the axis.

In the present invention, there may be employed a configuration that the rotary shaft includes a flange part adjacent in the axial direction, and a coupling part coupled to the rotation mechanism, and the elastic member performs the urging such that the flange part comes into contact with the bearing in the axial direction. Moreover, there may be employed a configuration that the optical element includes an arm part extending in a radial direction of the rotary shaft, and the elastic member urges the arm part in the direction around the axis of the rotary shaft. Furthermore, there may be employed a configuration that the rotation mechanism includes a tilting bracket that is tilted by an actuator with a shaft coupling part serving as a fulcrum, and a coupling part of the rotary shaft is integrally coupled with the shaft coupling part in the direction around the axis.

### ADVANTAGEOUS EFFECTS OF INVENTION

According to the present invention, since the optical element is urged by the single elastic member in the axial direction and in the direction around the axis, the positions of the optical element in the axial direction and the in the direction around the axis are restricted, and there is obtained a high quality display apparatus that prevents rattling relative to the rotation mechanism coupled to the optical element and prevents variation of the display image.

### BRIEF DESCRIPTION OF THE DRAWINGS

[FIG. 1] FIG. 1 is a conceptual configuration view of a HUD apparatus to which the present invention is applied.
[FIG. 2] FIG. 2 is a schematic perspective view of the HUD apparatus.
[FIG. 3] FIG. 3 is a schematic plan view of the HUD apparatus.
[FIG. 4] FIG. 4 is a perspective view of a site near a first rotary shaft of a concave mirror.
[FIG. 5] FIG. 5 is a plan view of the site shown in FIG. 4.
[FIG. 6] FIG. 6 is a partial exploded perspective view of the site shown in FIG. 4.
[FIG. 7] FIG. 7(a) is a sectional view along the a-a line in FIG. 5, and FIG. 7(b) is a sectional view along the b-b line in FIG. 5.
[FIG. 8] FIG. 8(a) is a schematic exploded perspective view of the essential part of a modification, and FIG. 8(b) is a schematic elevational view of the modification.

### MODES FOR CARRYING OUT THE INVENTION

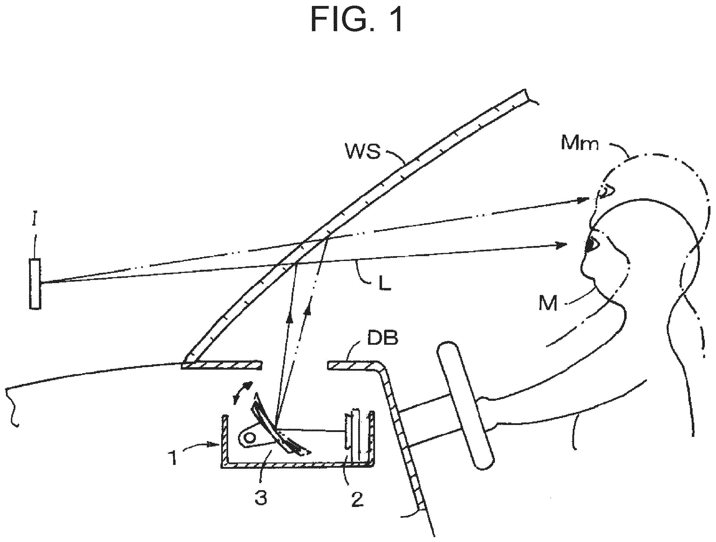

Next, embodiments of the present invention will be described with reference to the drawings. FIG. 1 is a conceptual configuration view of a HUD apparatus applied to an automobile and is a configuration as viewed from the left side of the automobile. A HUD apparatus 1 is arranged in a dashboard DB of the automobile and projects image light L emitted from the HUD apparatus 1 on a windscreen (referred to as windshield) WS of the automobile through an upper opening of the dashboard DB. The projected image light L is reflected on the windshield WS to be oriented to an occupant M such as a driver of the automobile. By this image light L entering an eye of the occupant M, the occupant M can visually recognize an image (virtual image) I originated from the image light at a position on the front side of the automobile through the windshield WS, which results in display of the image.

The HUD apparatus 1 includes an image display unit 2 and an optical element 3 that projects an image displayed on this image display unit 2 on the windshield WS shown in FIG. 1. The image display unit 2 has a configuration which displays a desired image to emit its image light and is configured, for example, of a liquid crystal display apparatus. The optical axis element 3 is configured of a reflecting mirror, herein a concave mirror, that reflects the image light emitted from the image display unit 2. This concave mirror 3 includes a reflection surface part 30 configured of a spherical surface or a free curved surface with a curvature that gives a necessary focal distance, and this reflection surface part 30 is arranged to face the image display unit 2. Thereby, there is employed a configuration that light that is emitted from the image display unit 2 to be reflected on the reflection surface part 30 of the concave mirror 3 is projected on the windshield WS and reflected thereon to enter an eye of the occupant M.

Moreover, in the HUD apparatus 1, a rotation mechanism for tilting the concave mirror 3 as mentioned later is provided. By an angle of the concave mirror 3 being adjusted with this rotation mechanism, as shown with dot-and-dash lines, the orientation of the light reflected on the concave mirror 3 is changed, and the position and the orientation of the light projected on the windshield WS are changed. Thereby, the orientation of the light that enters an eye of an occupant Mm high in line of sight caused by a difference in body height and the like is changed, and the occupant M and the occupant Mm can visually recognize the image I at an equivalent position.

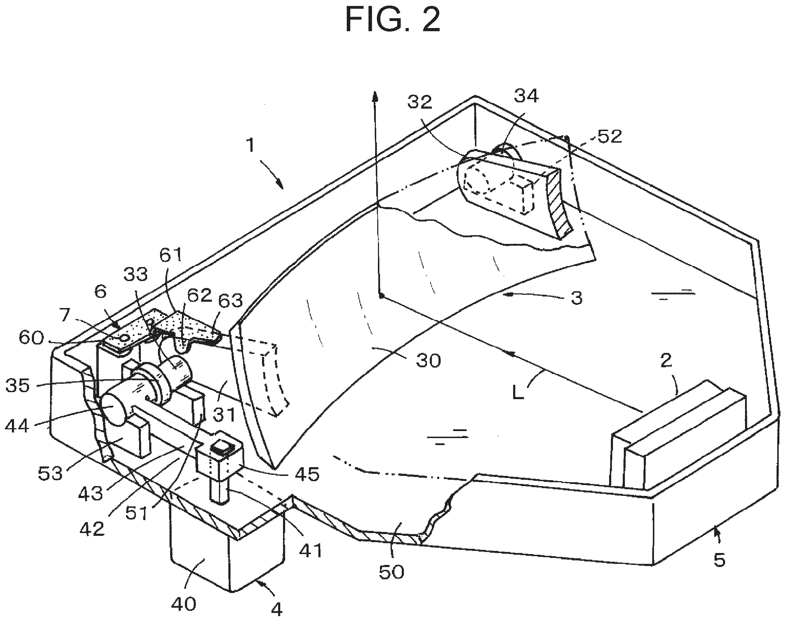

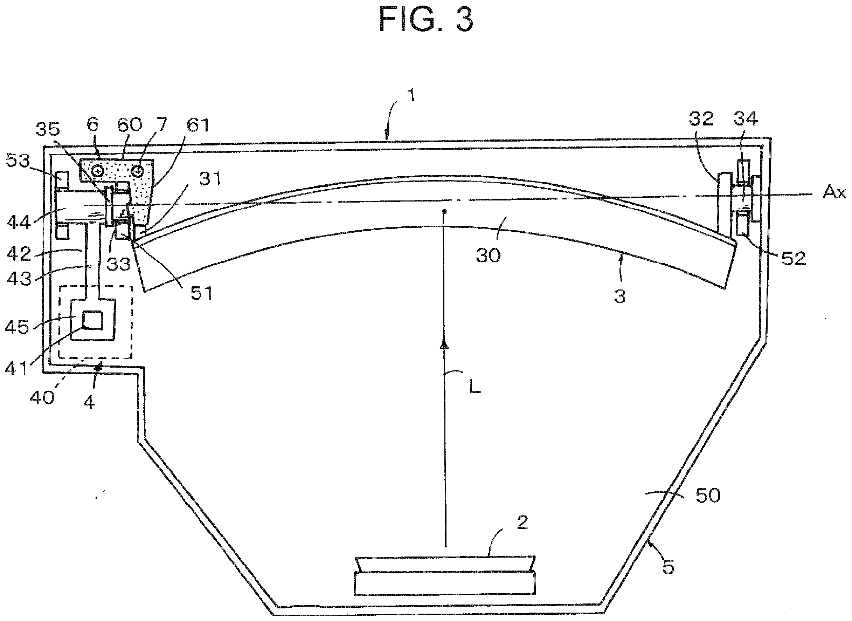

FIG. 2 is a schematic perspective view of the HUD apparatus 1, and FIG. 3 is a schematic plan view thereof. Notably, a right-left direction and an up-down direction are hereafter the directions based on FIG. 2. The HUD apparatus 1 includes a shallow dish-like apparatus body 5, and the image display 2 is mounted on a part of an inner bottom part 50 of this apparatus body 5, the concave mirror 3 being mounted at a position facing it. The concave mirror 3 includes a first arm part 31 and a second arm part 32 that protrude at both right and left ends of the reflection surface part 30 to the rear surface side thereof and each of which has a tapered shape the upper and lower edges of which have a decreasing width dimension toward the tip, and a first rotary shaft 33 and a second rotary shaft 34 that protrude outward in the horizontal right-left direction from the tips of these first arm part 31 and second arm part 32, respectively.

Further, wall-like first bearing 51 and second bearing 52 stand at sites corresponding to the respective rotary shafts 33, 34 on the inner bottom part 50 of the apparatus body 5. Each of these first bearing 51 and second bearing 52 employs a configuration in which a semi-circular concave groove is formed at its upper edge, and the rotary shaft 33, 34 is pivotally supported on the concave groove of the corresponding bearing 51, 52. Accordingly, the concave mirror 3 is tilted with an axis line Ax connecting both rotary shafts 33, 34 serving as a fulcrum by these rotary shafts 33, 34 pivoting, and a tilt angle of the reflection surface part 30 in the vertical direction is changed.

A tilting bracket 42 of a rotation mechanism 4 is coupled to the first rotary shaft 33. This rotation mechanism 4 includes an actuator 40 fixed onto a lower surface of the inner bottom part 50 of the apparatus body 5, and this actuator 40 includes a drive rod 41 having a screw configuration that is advanced, for example, by a motor that does not appear in FIG. 2 or 3. The drive rod 41 protrudes upward from the inner bottom part 50 of the apparatus body 5 and is moved in its axial direction, that is, the up-down direction. The tilting bracket 42 is coupled to the upper tip of this drive rod 41 with a ball joint, is tilted with the up-down motion of the drive rod 41, and this tilting enables the coupled first rotary shaft 33 to pivot and the concave mirror 3 to be tilted.

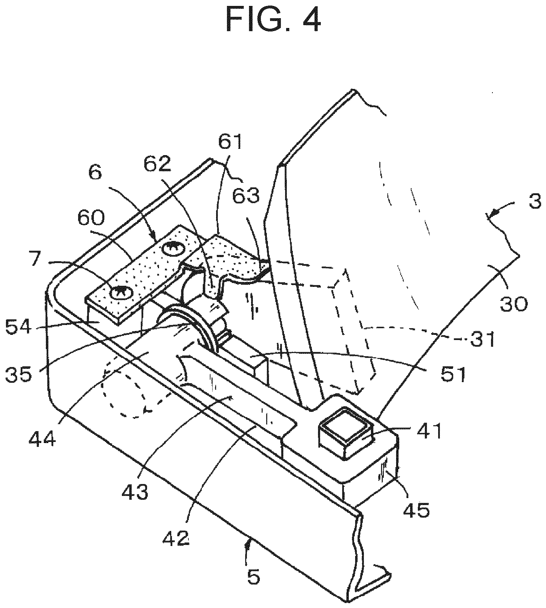

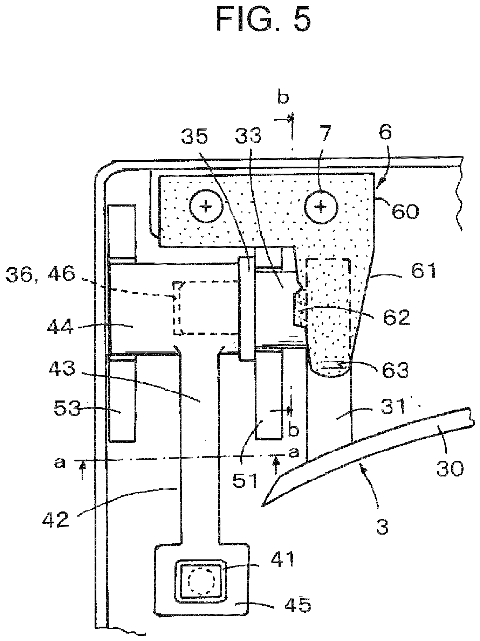

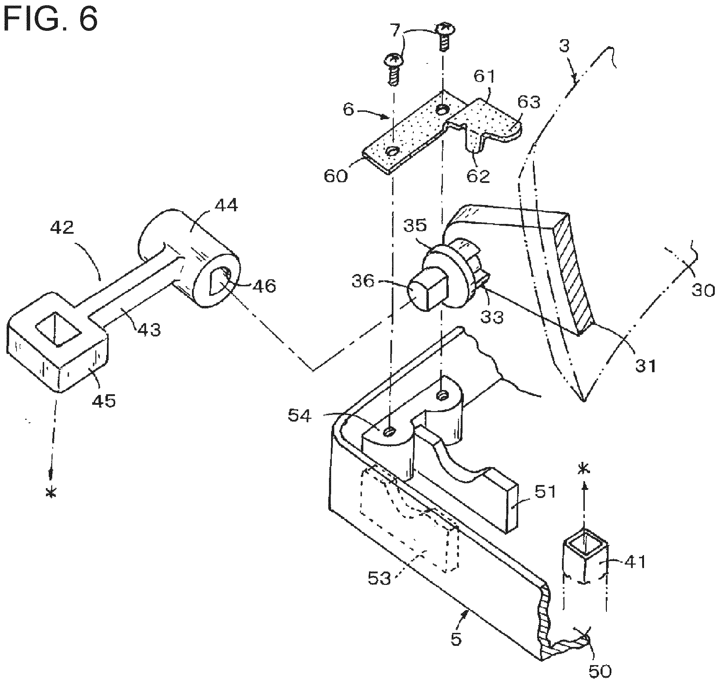

FIG. 4 is a perspective view of a site near the first rotary shaft 33 of the concave mirror 3, and FIG. 5 is a plan view thereof. Moreover, FIG. 6 is a partial exploded perspective view thereof. A flange part 35 and a coupling part 36 are integrally formed with the first rotary shaft 33 in the axial direction. The flange part 35 is formed as a circular flange having a larger diameter than the first rotary shaft 33. The coupling part 36 is formed as a non-circular shaft obtained by cutting out a part of the circumferential surface into a flat surface. Further, when the first rotary shaft 33 is supported on the first bearing 51, the flange part 35 and the coupling part 36 are positioned to protrude to the outer side (left side) of the first bearing 51, and the coupling part 36 is coupled to the tilting bracket 42.

The tilting bracket 42 has an intermediate part 43, in its longitudinal direction, formed into a plate shape, one end part of this intermediate part 43 is configured as a shaft coupling part 44 to be coupled to the first rotary shaft 33, and the other end part thereof is configured as an actuator coupling part 45 to be coupled to the drive rod 41 of the actuator 4. The shaft coupling part 44 is formed into a column shape having a substantially equal diameter dimension to that of the flange part 35, and is supported on a second bearing 53 standing on a part of the inner bottom part 50 of the apparatus body 5. Thereby, the tilting bracket 42 is able to be tilted with this shaft coupling part 44 serving as a fulcrum in the direction around the axis.

On the end face on the inner side (right side) of the shaft coupling part 44, a coupling hole 46 composed of a concave hole having a sectional shape that has a flat surface on a part of the inner circumferential surface as with the coupling part 36 integrated with the first rotary shaft 33 is formed. The coupling part 36 is fitted into this coupling hole 46 in the axial direction, and thereby, the coupling part 36, that is, the first rotary shaft 33 is integrated with the shaft coupling part 44 in the direction around the axis. Moreover, the actuator coupling part 45 is coupled to the drive rod 41 with the ball joint as mentioned above. Thereby, when the actuator 40 is driven and the drive rod 41 is moved in the up-down direction, the tilting bracket 42 is tilted with the shaft coupling part 44 serving as the fulcrum in the vertical direction, and this tilting enables the first rotary shaft 33 to rotate around the axis and the concave mirror 3 to be tilted.

Furthermore, on the inner bottom part 50 of the apparatus body 5, a boss part 54 stands at a site facing the first rotary shaft 33, and an elastic member 6 is arranged on this boss part 54. This elastic member 6 is composed of a leaf spring obtained through bending processing into a necessary shape, and includes a fixation part 60 fixed to the boss part 54, and an elastic contact part 61 extending from this fixation part 60. The fixation part 60 of this leaf spring 6 is fixed to the boss part 54 with two screws 7, and the elastic contact part 61 thereof is brought into elastic contact with the first arm part 31 of the concave mirror 3.

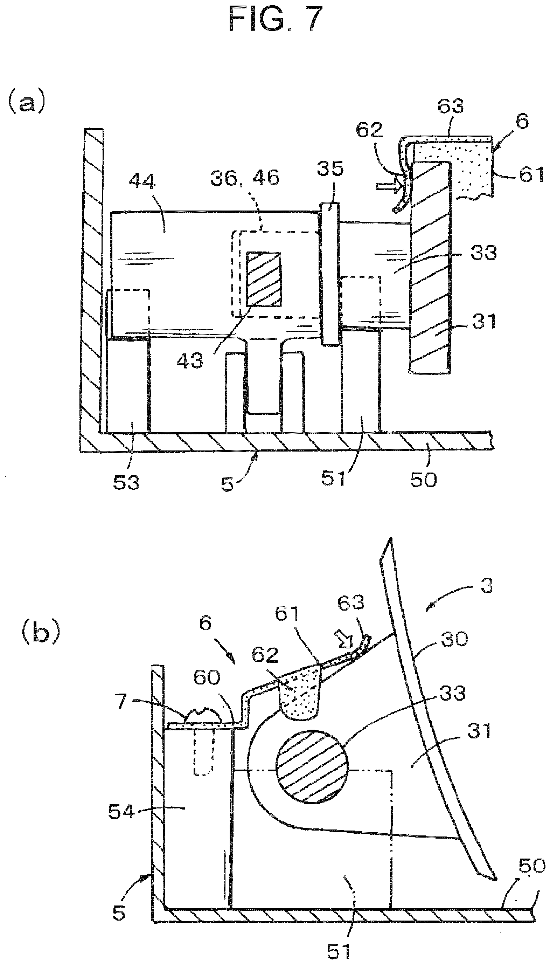

FIGS. 7(a) and 7(b) are sectional views along the a-a line and the b-b line in FIG. 5, respectively. The elastic contact part 61 of the leaf spring 6 includes a first elastic contact piece 62 that is brought into elastic contact with an outer surface, that is, a left surface of the first arm part 31, and a second elastic contact piece 63 that is brought into elastic contact with the upper edge of the tapered shape of the first arm part 31. The first elastic contact piece 62 is composed of a small tongue protruding downward from one edge of the second elastic contact piece 63 and is in elastic contact with the outer surface (left surface) of the first arm part 31. Thereby, the first elastic contact piece 62 is to urge the first arm part 31 inward in the axial direction, that is, toward the right side in FIG. 7(a).

Moreover, the second elastic contact piece 63 is composed as a cantilever extending along the first arm part 31 from the fixation part 60, and its tip is in elastic contact with the upper edge of the first arm part 31. This second elastic contact piece 63 is formed to have a length dimension larger than the diameter dimension of the first rotary shaft 33, and is in elastic contact at a site nearer to the reflection surface part 30 of the concave mirror 3 than to the first rotary shaft 33. Thereby, the second elastic contact piece 63 urges the basal end side of the first arm part 31, that is, the reflection surface part 30 side downward. In other words, the first rotary shaft 33 is to be urged in the clockwise direction in FIG. 7(b).

As above, the concave mirror 3 is urged by the first elastic piece 62 of the leaf spring 6 in a direction along the axis line Ax from the side of the first rotary shaft 33 toward the second rotary shaft 34. Moreover, the concave mirror 3 is urged by the second elastic piece 63 in the direction around the axis of the axis line Ax in such a way that the reflection surface part 30 is to be oriented downward.

Since with the HUD apparatus 1 described above, as described with reference to FIG. 1, the image light of the image displayed on the image display unit 2 is reflected on the concave mirror 3, and further, projected on the windshield WS of the automobile, the occupant M visually recognizes the display image (virtual image) I at the position on the front side of the automobile through the windshield WS. Moreover, by the actuator 40 of the rotation mechanism 4 being controlled, the tilting bracket 42 is tilted with the shaft coupling part 44 serving as the fulcrum in the vertical direction. This tilting causes the first rotary shaft 33 coupled to the shaft coupling part 44 to pivot integrally, the concave mirror 3 is tilted via the first arm part 31, and the tilt angle of the reflection surface part 30 is changed. This control to change the tilt angle of the reflection surface part 30 changes the position and the orientation of the image light projected on the windshield WS, which leads to adjustment such that an occupant M having a different position in terms of line of sight can also visually recognize the image I at an equivalent position.

Now, in this HUD apparatus 1, the first rotary shaft 33 and the second rotary shaft 34 of the concave mirror 3 are supported on the first bearing 51 and the second bearing 52, respectively, provided in the apparatus body 5. While the axial directional dimensions of these first rotary shaft 33 and second rotary shaft 34 are designed to be substantially equal to the axial directional dimensions of the respective corresponding first bearing 51 and second bearing 52, their designed dimensions have predetermined allowances (margins) in reality in order to allow both the rotary shafts 33, 34 to pivot. Therefore, the first rotary shaft 33 and the second rotary shaft 34 are to move on the first bearing 51 and the second bearing 52 in the axial direction by the dimensions of these allowances, which thereby occasionally causes the concave mirror 3 to rattle along the axis line Ax in the axial direction. This rattling in the axial direction changes the position of the concave mirror 3 in the right-left direction and varies the position of the display image in the right-left direction.

In this embodiment, the flange part 35 is provided to be adjacent to the first rotary shaft 33, and this flange part 35 is arranged at a position facing the left surface of the first bearing 51. Moreover, the first elastic contact piece 62 of the elastic contact part 61 of the leaf spring 6 is in elastic contact with the left surface of the first arm part 31. Accordingly, when the first arm part 31 is urged by the first elastic contact piece 62 to the right orientation in the axial direction and the first rotary shaft 33 integrated therewith is also urged to the right orientation, the further integrated flange part 35 is brought into contact with the left surface of the first bearing 51, and this contact restricts motion of the first rotary shaft 33 and the first arm part 31 in the axial direction, restricts motion of the concave mirror 3 in the axial direction, and prevents the rattling in the axial direction, that is, in the right-left direction.

Moreover, as to the first rotary shaft 33 in the direction around the axis, each of the coupling part 36 integrated with the first rotary shaft 33 and the coupling hole 46 of the shaft coupling part 44 of the tilting bracket 42 is formed into a non-circle which has a flat surface on a part of the circumferential surface, and when the coupling part 36 is fitted into the coupling hole 46, the first rotary shaft 33 and the shaft coupling part 44 are integrated in the direction around the axis and the first rotary shaft 33 and the tilting bracket 42 are accordingly integrated in the direction around the axis. Nonetheless, when there is a dimension error between these coupling part 36 and coupling hole 46, rattling between the first rotary shaft 33 and the tilting bracket 42 in the direction around the axis occurs. This rattling in the direction around the axis causes the angle of the concave mirror 3 in the up-down direction to be unstable and the position of the display image to vary in the up-down direction.

In this embodiment, the second elastic contact piece 63 of the elastic contact part 61 of the leaf spring 6 is in elastic contact with the upper edge of the first arm part 31, the first arm part 31 is urged in the clockwise direction, and this urging force urges the coupling part 36 integrated with the first rotary shaft 33 in the clockwise direction with respect to the coupling hole 46 of the shaft coupling part 44. Namely, the flat surface parts of the coupling part 36 and the coupling hole 46 come into contact with each other to be restricted in the direction around the axis. Thereby, the first rotary shaft 33 is prevented from rattling relative to the tilting bracket 42 in the direction around the axis, and the angle of the concave mirror 3 in the up-down direction is prevented from changing.

As above, in the embodiment, the elastic contact part 61 of one leaf spring 6 includes the first elastic contact piece 62 and the second elastic contact piece 63, the first elastic contact piece 62 prevents the concave mirror 3 from rattling in the axial direction, and the second elastic contact piece 63 prevents the concave mirror 3 from rattling in terms of the tilt angle. Accordingly, one leaf spring 6, that is, one elastic member can prevent the concave mirror 3 from rattling in the axial direction and in the direction around the axis, and the HUD apparatus can be configured that has a simple configuration with a reduced number of components and a reduced number of assembly steps.

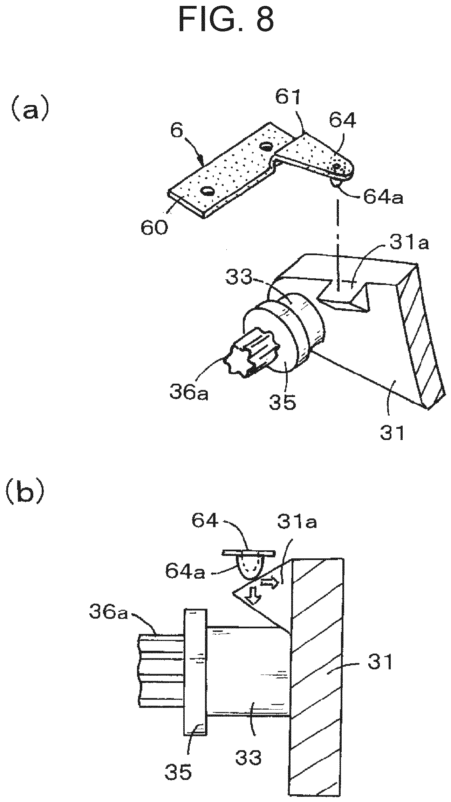

FIG. 8 shows views for explaining a modification of the embodiment, FIG. 8(a) is a schematic perspective view of its essential part, and FIG. 8(b) is a schematic elevational view for explaining its operation. As shown in FIG. 8(a), with the first arm part 31, an inclined surface part 31a inclined relative to both directions of the axial direction and the direction around the axis of the first rotary shaft 33 is integrally formed. Moreover, the elastic contact part 61 of the leaf spring 6 as the elastic member is formed as a single elastic contact piece 64 that is brought into elastic contact with this inclined surface part 31a in the direction around the axis. At a site where this elastic contact piece 64 is in elastic contact with the inclined surface part 31a, a projection 64a in a shape, for example, a spherical shape, that can slidingly move along the inclined surface part 31a in the axial direction and in the direction around the axis is integrally formed. Notably, a length dimension from the fixation part 60 to the projection 64a of the leaf spring 6 on the elastic contact piece 64 is set to be larger than a length from the fixation part 60 to the axis of the first rotary shaft 33.

As shown in FIG. 8(b), by the projection 64a of the elastic contact piece 64 coming into elastic contact with the inclined surface part 31a in the direction around the axis, a component force of an elastic contact force indicated by an arrow in the inclined surface part 31a is generated in the axial direction. Thereby, the first arm part 31 integrated with the inclined surface part 31a is urged with the elastic contact force of the elastic contact piece 64 in the direction around the axis and in the axial direction. Accordingly, as with the embodiment, the first rotary shaft 33 is prevented from rattling relative to the tilting bracket 42 in the direction around the axis, and a change in angle of the concave mirror 3 in the vertical direction is prevented. Moreover, in this modification, a coupling part 36a integrated with the first rotary shaft 33 employs a spline structure, and in this case, the coupling hole 46 of the shaft coupling part 44 of the tilting bracket 42 also employs a spline structure.

Also in this modification, the leaf spring 6 as one elastic member prevents the concave mirror 3 from rattling in the axial direction and from rattling in the direction around the axis, and variation in tilt probability of the concave mirror 3 is prevented, or variation in positional accuracy of the display image is prevented. Accordingly, a high quality HUD apparatus can be configured that has a simple configuration with a reduced number of components and a reduced number of assembly steps.

In the present invention, the elastic member is not limited to a leaf spring as long as there is employed a configuration to urge, with one member, the concave mirror in the axial direction and in the direction around the axis, and may be configured of a wire spring. For example, there may be employed a configuration to urge, with a torsion spring, the concave mirror in the axial direction and in the direction around the axis. Moreover, when as with the modification, there is employed a configuration to urge, using component forces generated from one elastic member, the concave mirror in the axial direction and in the direction around the axis, the elastic member may be composed of a coil spring.

A display apparatus of the present invention is not limited to the HUD apparatus described for the embodiment but may be applied to a display apparatus including an optical element that is supported on an apparatus body with a rotary shaft and is tilted around the axis of the rotary shaft. Moreover, when the present invention is configured as a HUD apparatus, it may be configured using a transparent plastic disc such as a combiner. Furthermore, the optical element in the present invention is not limited to a concave mirror but may apply as long as it is an optical element that is pivotally supported on the apparatus body and is caused to pivot with a rotation mechanism for control to change the display position and the display orientation of the display image.

This international application claims priority to Japanese Patent Application No. 2021-133478, as a Japanese patent application, filed Aug. 18, 2021, and the entire contents of Japanese Patent Application No. 2021-133478, as the Japanese patent application, are incorporated by reference in this international application.

The aforementioned description for specific embodiments of the present invention is presented for the purpose of exemplary illustration. These are not intended to be exhaustive and limit the present invention to the described modes as they are. It is obvious for those skilled in the art that many modifications and alterations thereof may occur in view of the contents of the aforementioned description.

### REFERENCE SIGNS LIST

1 HUD apparatus (display apparatus)
2 image display unit
3 concave mirror (optical element)
4 rotation mechanism
5 apparatus body
6 leaf spring (elastic member)
30 reflection surface part
31, 32 arm part
33, 34 rotary shaft
35 flange part
36 coupling part
40 actuator
41 drive rod
42 tilting bracket
44 shaft coupling part
46 coupling hole
51, 52, 53 bearing
61 elastic contact part
62, 63 elastic contact piece

## Claims

1. A display apparatus comprising an optical element that projects, on a translucent member of a vehicle, image light of an image displayed on an image display unit, the display apparatus **characterized in that**
the optical element is supported on an apparatus body and is able to pivot with a rotation mechanism in a direction around an axis, and
the display apparatus comprises a single elastic member that urges the optical element in an axial direction and in the direction around the axis.

2. The display apparatus according to claim 1, wherein the optical element includes a rotary shaft, and the rotary shaft is pivotally supported on a bearing provided in the apparatus body and is coupled to the rotation mechanism.

3. The display apparatus according to claim 2, wherein the elastic member is composed of a leaf spring and the display apparatus includes
a fixation part fixed to the apparatus body, and
an elastic contact piece that is in elastic contact with the optical element and urges the optical element in the axial direction and in the direction around the axis.

4. The display apparatus according to claim 3, wherein the elastic member is composed of a leaf spring and the display apparatus includes
a fixation part fixed to the apparatus body,
a first elastic contact piece that urges the optical element in the axial direction, and
a second elastic contact piece that urges the optical element in the direction around the axis.

5. The display apparatus according to claim 3, wherein the elastic member is composed of a leaf spring and the display apparatus includes
a fixation part fixed to the apparatus body, and
an elastic contact piece that generates component forces for urging the optical element in the axial direction and in the direction around the axis.

6. The display apparatus according to any one of claims 2 to 5, wherein:
the rotary shaft includes
a flange part adjacent in the axial direction, and
a coupling part coupled to the rotation mechanism; and
the elastic member performs the urging such that the flange part comes into contact with the bearing in the axial direction.

7. The display apparatus according to any one of claims 2 to 6, wherein:
the optical element includes an arm part extending in a radial direction of the rotary shaft; and
the elastic member urges the arm part in the direction around the axis of the rotary shaft.

8. The display apparatus according to claim 6 or 7, wherein;
the rotation mechanism includes a tilting bracket that is tilted by an actuator with a shaft coupling part serving as a fulcrum; and
a coupling part of the rotary shaft is integrally coupled with the shaft coupling part in the direction around the axis.

9. The display apparatus according to any one of claims 1 to 8, wherein the optical element is a concave mirror and is tilted such that an angle of a reflecting surface of the optical element is changed relative to the windshield.

10. The display apparatus according to claim 9, wherein:
the display apparatus is configured as a head up display for an automobile; and
the windshield is a windscreen of the automobile.
